# EUROPEAN PATENT APPLICATION

(11) **EP 4 760 131 A1**
(43) Date of publication of application: **17.06.2026**
(21) Application number: 25224079.1
(22) Date of filing: 16.12.2025
(51) Int. Cl.: F16K 15/03, F02C 6/08, F04D 27/02, F16K 15/18, F16K 27/02

(54) **FLAPPER VALVE FOR AIRCRAFT ENGINE**

(30) Priority: 16.12.2024 US 202418982141
(71) Applicant: Pratt & Whitney Canada Corp., (01BE5) Longueuil, QC J4G 1A1 (CA)
(72) Inventor: MERCURI, Jason, (01BE5) Longueuil, J4G 1A1 (CA); PROKOFYEV, Sergey, (01BE5) Longueuil, J4G 1A1 (CA); SGOUROMITIS, John, (01BE5) Longueuil, J4G 1A1 (CA)
(74) Representative: Dehns

(57) **Abstract**

A valve assembly (20) for an aircraft engine (10) includes a base (21) defining an air opening (19) configured to receive airflow therethrough in a flow direction from an upstream side (15) to a downstream side (17), a stopper (24) extending from the downstream side (17) of the base (21) adjacent the air opening (19), and a flapper plate (22) pivotably mounted to the base (21) about a pivot axis (25). The flapper plate (22) is pivotable relative to the base (21) and the stopper (24) between a closed position (22B) and a fully open position (22A). In the fully open position (22A), a downstream surface (28) of the flapper plate (22) abuts the stopper (24). In the closed position (22B), the flapper plate (22) obstructs the air opening (19). A deflector (41) extends from an upstream surface (26) of the flapper plate (22) and projects into the airflow when the flapper plate (22) is located in the fully open position.

## Description

### TECHNICAL FIELD

The present disclosure relates generally to aircraft engines and, more particularly, to flapper valves used in such engines.

### BACKGROUND

The compressor sections of most aircraft engines include bleed valves (sometimes called bleed off valves) that are used to bleed excess airflow away from the main gas path within the compressor section, thereby mitigating compressor surge. Bleed valves and more generally bleed air systems thereby permit excess pressurized air to be bled from the compressor and dumped overboard. Flapper valves are sometimes used downstream of such bleed valves, to prevent backflow of the bleed air and back-pressure from the atmosphere.

Flapper valves are however prone to flutter. Flutter is a phenomenon whereby the flow conditions cause vortex shedding and turbulence, which can cause the flapper plates within the flapper valve to vibrate (i.e., flutter). In some cases, this flutter and repeated contact between the flapper plates and the stopper of the flapper valve can cause excessive wear and fatigue of the valve. The lifespan of the flapper valve may thus be reduced before servicing or replacement is required.

### SUMMARY

In one aspect of the invention there is provided a valve assembly for an aircraft engine, the valve assembly comprising: a base defining an air opening passing therethrough from an upstream side of the base to a downstream side of the base (relative to an intended flow direction when in use, e.g., from a high pressure side to a low pressure side of the air opening), the air opening configured to receive airflow therethrough in a flow direction from the upstream side to the downstream side; a stopper extending from the downstream side of the base adjacent the air opening; a flapper plate pivotably mounted to the base about a pivot axis, the flapper plate having an upstream surface and a downstream surface opposite the upstream surface, the upstream surface extending from an inner edge adjacent or at the pivot axis to a (remote) outer edge or tip (e.g., laterally opposing the inner edge, remote from the pivot axis); the flapper plate being pivotable (about the pivot axis) relative to the base and the stopper between a closed position and a fully open position, wherein in the fully open position the downstream surface of the flapper plate abuts the stopper, and in the closed position the flapper plate obstructs the air opening; and a deflector (e.g., a flow deflector or control surface) extending from the upstream surface of the flapper plate and projecting into the airflow when the flapper plate is located in the fully open position.

The valve assembly as defined above and described herein includes, in certain embodiments, one or more of the following features, in whole or in part, and in any combination.

In any of the aspects or embodiments described above or herein, the stopper may define a planar surface complimentary to the downstream surface of the flapper plate, such that the downstream surface of the flapper plate abuts against the planar surface of the stopper to define a planar interface.

In any of the aspects or embodiments described above or herein, the planar surface of the stopper may be orientated at an angle defined relative to the downstream side of the base, the angle being greater than 0 degrees and less than or equal to 90 degrees.

In any of the aspects or embodiments described above or herein, the deflector may extend from the upstream surface of the flapper plate at an angle relative to the flow direction, the angle being greater than 0 degrees and less than 180 degrees.

In any of the aspects or embodiments described above or herein, the deflector may be substantially perpendicular to a plane defined by the upstream surface of the flapper plate.

In any of the aspects or embodiments described above or herein, the deflector may be located on the upstream surface at a position between the inner edge and the remote outer edge.

In any of the aspects or embodiments described above or herein, the position on the upstream surface may correspond substantially to a height of the stopper away from the downstream side of the base.

In any of the aspects or embodiments described above or herein, the flapper plate may define a length between the inner edge and the remote outer edge, the position of the deflector on the upstream surface being between 1/3 to 2/3 of the length away from the inner edge.

In any of the aspects or embodiments described above or herein, the flapper plate may be one of two flapper plates pivotably mounted to the base and independently movable, the two flapper plates being located on opposite sides of the stopper and disposed such that the downstream surface of each of the two flapper plates faces the other when the two flapper plates are in the fully open position.

In any of the aspects or embodiments described above or herein, the stopper may have a first planar surface facing a first one of the two flapper plates and a second planar surface facing a second one of the two flapper plates, the first and second planar surfaces of the stopper being non-parallel.

In any of the aspects or embodiments described above or herein, the stopper may define a trapezoidal cross-sectional shape with a wider downstream end than upstream end, wherein the first and second planar surfaces of the stopper are oriented at acute angles relative to the downstream side of the base.

In any of the aspects or embodiments described above or herein, the deflector may define an arcuate body that has a concave surface facing in the flow direction.

In any of the aspects or embodiments described above or herein, a torsion spring may dampen movement of the flapper plate between the closed position and the fully open position.

In any of the aspects or embodiments described above or herein, a solenoid, upon actuation by an electric current, may retain the flapper plate abutted against the stopper in the fully open position.

In any of the aspects or embodiments described above or herein, the solenoid may be integrated into the stopper.

In any of the aspects or embodiments described above or herein, the flapper plates may be made of a magnetic material.

In any of the aspects or embodiments described above or herein, a magnet may define at least a portion of the stopper, and the flapper plate may be made of a magnetic material having an opposite pole to the magnet of the stopper, and may include a servo assembly operable to disengage the flapper plate from the stopper when the flapper plate is to be returned to the closed position thereof.

In another aspect of the invention there is provided a valve assembly for an aircraft engine, the valve assembly comprising: a base defining an air opening passing therethrough from an upstream side of the base to a downstream side of the base, the air opening configured to receive airflow therethrough in a flow direction from the upstream side to the downstream side; a stopper extending from the downstream side of the base adjacent the air opening; a flapper plate pivotably mounted to the base about a pivot axis, the flapper plate having an upstream surface and a downstream surface opposite the upstream surface, the upstream surface extending from an inner edge adjacent the pivot axis to a remote outer edge; the flapper plate being pivotable relative to the base and the stopper from a closed position to a fully open position when the flapper plate is acted upon by a force generated by the airflow, wherein in the fully open position the downstream surface of the flapper plate abuts the stopper, and in the closed position the flapper plate obstructs the air opening; and a force augmentor (e.g., including, in addition to or instead of the deflector of the first aspect) for generating an additional force on the flapper plate in a direction towards the stopper to maintain the downstream surface of the flapper plate abutted against the stopper in the fully open position.

In any of the aspects or embodiments described above or herein, the force augmentor may include one or more of: a deflector extending from the upstream surface of the flapper plate and projecting into the airflow when the flapper plate is located in the fully open position; a solenoid that, upon actuation by an electric current, retains the flapper plate abutted against the stopper in the fully open position; and a magnet defining at least a portion of the stopper, the flapper plate being made of a magnetic material having an opposite pole to the magnet of the stopper, and including a servo assembly operable to disengage the flapper plate from the stopper when the flapper plate is to be returned to the closed position thereof.

In another aspect of the invention there is provided a method of using a valve assembly (e.g., in accordance with any of the aspects or embodiments described above or herein) in an aircraft engine, the method comprising: pivoting a flapper plate of the valve assembly from a closed position to a fully open position by exerting a force on the flapper plate using a flow of air flowing through the valve assembly (wherein in the fully open position a downstream surface of the flapper plate may abut a stopper (e.g., extending from a downstream side of the valve assembly), and in the closed position the flapper plate may obstruct an air opening (e.g., configured to receive the flow of air therethrough in the flow direction from an upstream side to the downstream side)); and increasing the force on the flapper plate using a force augmentor or a deflector (e.g., extending from an upstream surface of the flapper plate and projecting into the flow of air when the flapper plate is located in the fully open position) to maintain the flapper plate in the fully open position.

### BRIEF DESCRIPTION OF THE DRAWINGS

Reference is now made to the accompanying figures in which:
Fig. 1 is a schematic cross sectional view of an aircraft engine;
Fig. 2A is a schematic side view of a flapper valve of the aircraft engine of Fig. 1;
Fig. 2B is a schematic side view of the flapper valve of Fig. 2A, having a different stopper;
Fig. 3A is a top perspective view of the flapper valve of Figs. 2A-2B, shown in a closed position;
Fig. 3B is a bottom perspective view of the flapper valve of Figs. 2A-2B, shown in the closed position;
Fig. 4A is a top perspective view of the flapper valve of Figs. 2A-2B, shown in an open position;
Fig. 4B is a bottom perspective view of the flapper valve of Figs. 2A-2B, shown in the open position;
Fig. 5 is a schematic side view of a flapper valve of the aircraft engine of Fig. 1, in accordance with another embodiment;
Fig. 6 is a schematic side view of a flapper valve of the aircraft engine of Fig. 1, in accordance with another embodiment;
Fig. 7A is a side schematic view of a flapper valve of the aircraft engine of Fig. 1, in accordance with another embodiment;
Fig. 7B is a schematic top view of the flapper valve of Fig. 7A; and
Fig. 8 is a flow chart depicting a method of a method of using a valve assembly in accordance with the present disclosure.

### DETAILED DESCRIPTION

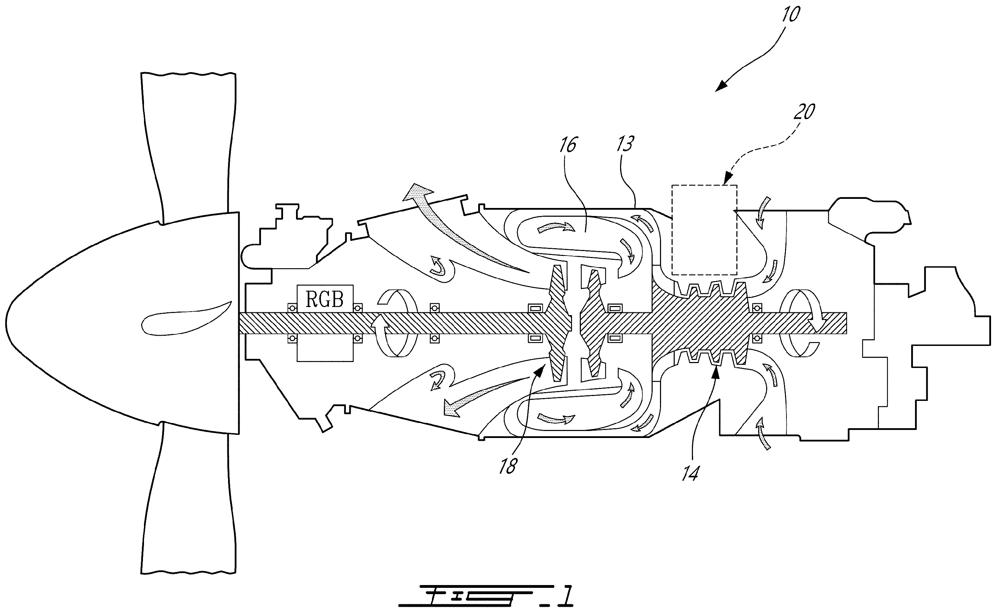

Fig. 1 illustrates an aircraft engine 10, which in this embodiment is a turboprop gas turbine engine, generally comprising in serial flow communication, within a casing 13, a compressor section 14 for pressurizing the air, a combustor 16 in which the compressed air is mixed with fuel and ignited for generating an annular stream of hot combustion gases, and a turbine section 18 for extracting energy from the combustion gases. As schematically designated by reference numeral 20, at least one valve assembly 20 is provided in the compressor section 14. In a particular embodiment, the valve assembly 20 is a flapper valve that forms part of a bleed air system of the aircraft engine 10, which is used to selectively bleed air from the compressor section 14 and purge the bled air to the atmosphere. The valve assembly 20 (also referred to herein as the flapper valve 20) may for example be located with a bleed conduit downstream from a bleed valve of the bleed air system and upstream of an exit port of the bleed conduit communicating with atmosphere outside the aircraft engine (i.e., overboard). The flapper valve 20 acts as a one-way valve that prevents or limits backflow of the bleed air once bled from the core of the compressor section 14 via the bleed valve. The flapper valve 20 may also limit back-pressure from the atmosphere, so that the bleed air extracted from the aircraft engine 10 is purged overboard.

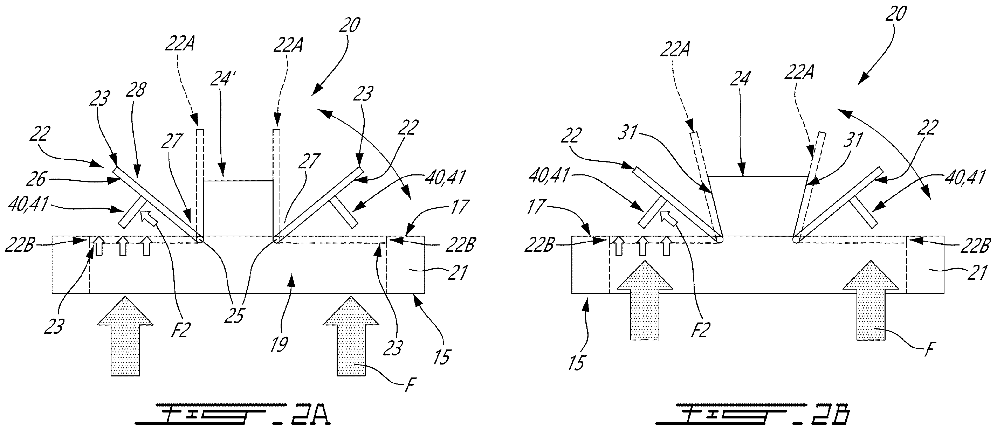

Turning now to FIGS. 2A-2B, the flapper valve 20 in accordance with a particular embodiment is depicted in further detail. As described above, the flapper valve 20 permits air to flow in one directly only, for example air bled out of the compressor section 14 of the aircraft engine 10, which is directed downstream (away from the engine core) and dumped overboard to atmosphere. The flapper valve 20 prevents back-flow from the atmosphere, such that pressurized airflow bled from the compressor section 14 can pass through the flapper valve 20 in a flow direction F, but air outside of the aircraft engine 10 (e.g., atmospheric air) cannot flow back into the main gas path of the compressor section 14 through the bleed conduit.

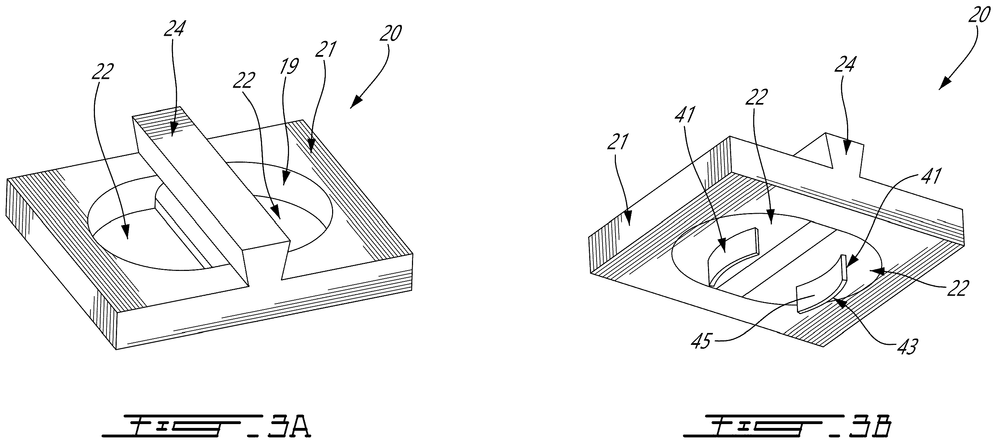

The flapper valve 20 of FIGS. 2A-2B includes generally a body or base 21 that defines an air opening 19. The air opening 19 (see also FIGS. 3A-3B) extends through the base 21 of the flapper valve 20, and allows for the airflow F (e.g., bleed airflow) to flow through the opening 19 when the flapper valve 20 is in an open position, as will be described in further detail below). The air opening 19 extends fully through the base 21, from an upstream side 15 to a downstream side 17 thereof. The opening 19 is opened or closed by a pivoting flapper plate 22, or two pivoting flapper plates 22, as will now be described in further detail.

The flapper valve 20 includes a flapper plate 22 that has an inner end or inner edge 27 that is pivotably mounted to the base 21 at a location adjacent to the air opening 19, and each flapper plate is pivotable about a pivot axis 25. The flapper plate 22 has an upstream surface 26 on one side and a downstream surface 28 on the opposite side of the flapper plate 22, and defines a remote outer tip 23 located at an outer edge of the flapper plate 22 opposite the pivot axis 25.

In the embodiment of figures 2A and 2B, the flapper valve 20 includes two flapper plates 22 that are independently movable. However, it is to be understood that the flapper valve 20 may include only a single flapper plate 22, or alternatively more than two of the flapper plates 22. Regardless of the configuration and number of flapper plates, each flapper plate 22 is movable relative to the base 21 about the pivot axis 25, such that the flapper plate 22 pivots between an open position 22A and a closed position 22B. Similarly, although the flapper valve 20 includes an air opening 19 that is covered by the two flapper plates 22 when they are in their closed position 22B, it is to be understood that two or more air openings 19 may also be provided in the flapper valve 20. For example, each flapper plate 22 may cover a respective air opening 19. Although each of the two flapper plates 22 may have its own pivot axis 25, it is also possible that the two flapper plates 22 pivot around a common pivot axis 25.

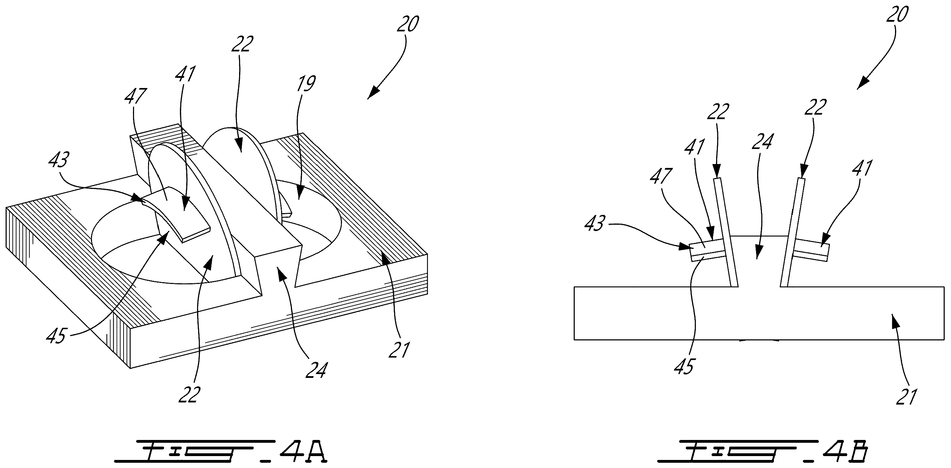

The two flapper plates 22 of the depicted embodiment of the flapper valve 20 are mounted in a back-to-back configuration, wherein when the two flapper plates 22 are located in their respective closed positions 22B, as shown in Figs. 3A-3B, the remote outer tips/edges 23 are disposed away from each other, in a horizontally opposed configuration. In this closed position 22B, the flapper plates 22 abut the base 21 thereby preventing air to flow through the valve assembly 20. When the two flapper plates 22 are in their respective open positions 22A, as shown in Figs. 4A-4B, the remote outer tips 23 are disposed close to each other and downstream surfaces 28 of each of the two flapper plates 22 face each other. In the open position 22A, the flapper plates 22 abut the stopper 24, 24', allowing air to flow through the valve assembly 20 (a general direction of the flow being indicated by the arrows F in Figs. 2A-2B). The flapper plates 22 are movable independently from one another between the open position 22A and the closed position 22B. The two flapper plates 22 are pivotally connected to the base 21 by one or more hinges, defined by the pivot axis 25. The stopper 24 is fixed to the base 21 and thus does not move relative thereto. The flapper plates 22 are actuated by the air flowing through the air opening 19 of the valve assembly 20. The flow of air creates a force onto the flapper 22 which moves it from the closed position 22B to the open position 22A. In one embodiment, the flapper plates 22 abut the base 21 in the closed position 22B.

In the closed position 22B, the tips 23 of the flapper plates 22 are disposed away from each other and the plates extend in opposite directions within a common plane. Thus in the closed position 22B, the flapper plates 22 are at 180 degrees from another. In the open position 22A, which will also be referred to as the fully open position 22A, the tips 23 of the flapper plates 22 are disposed close to each other and the flapper plates 22 are both disposed at a non-zero angle relative to the afore-mentioned plane (or, alternately, relative to the downstream side 17 of the base 21).

A stopper 24', 24 is disposed between the two flapper plates 22, and acts to limit the travel (and angle) of the flapper plates 22 when in the fully open position 22A. Fig. 2A depicts a first stopper 24', which is schematically depicted as having a generally square or rectangular cross-sectional shape, and Figs. 2B-4B depict a stopper 24 in accordance with a particular embodiment of the present disclosure, wherein the stopper 24 is trapezoidal in shape, as will be described in further detail below. The stopper 24 will simply be referred to herein, for ease of reference.

As seen in Figs. 3A-4B, the stopper 24 extends in a downstream direction from the downstream side 17 of the base 21, adjacent the air opening 19. The stopper 24 is centrally located on the base 21 and, in this case, bisects the air opening 19. The flapper plates 22 are pivotably mounted to the base 21 at pivot axes 25 located proximate to the stopper 24. In Figs. 2A-2B, the pivot axis 25 of the flapper plates 22 are located near a base of the stopper 24. In Figs. 3A-4B, the flapper plates 22 are pivotably mounted to the base 21 within the air opening 19, just below the stopper 24. In this case, therefore, the stopper 24 overlies the inner edges 27 of the flapper plates 22 at their pivot points. In all cases, the stopper defines the fully open position 22A of the flapper plates 22, in that when the downstream surface 28 of the flapper plate 22 abuts a complementary planar surface 31 on the stopper 24 (see Fig. 2B, for example) to define a planar interface therebetween, and the flapper plate 22 is thereby prevented from opening further.

In the embodiment of Figs. 2B, 3A-3B and 4A-4B, the stopper 24 defines a trapezoidal cross-sectional shape, when viewed in cross-section or from a side elevation view as shown in Fig. 2B and 4B, for example. In the depicted embodiment, the trapezoidal stopper 24 has a wider downstream end than upstream end, and the planar surface 31 on each of the opposed and angled sides of the trapezoidal stopper 24 is oriented at an acute angle (less than 90 degrees) relative to a reference plane - which may be the downstream side 17 of the base 21. The two planar surfaces 31 are therefore not parallel to each other, and are skewed relative to each other such that they extend away from one another in the downstream direction. Each planar surface 31 of the stopper 24 is therefore oriented at an angle that is greater than 0 degrees and less than or equal to 90 degrees, wherein the angle is measured relative to the downstream side 17 of the base 21.

The trapezoidal stopper 24 means that when the downstream surface of the flapper plate 22 is abutted against the planar surface 31 of the stopper, when the flapper plate 22 is in its fully open position 22A, the flapper plate 22 will maintain an angular position in the fully open position 22A that corresponds to the angle of the planar surface 31 of the stopper 24. This may further help maintain the flapper plate 22 pressed against the stopper 24, when the valve is in the open position, thereby helping to minimize flutter of the flapper plate 22 given the force of the airflow F against the upstream surface 26 of the flapper plate 22.

Referring still to Fig. 2A to Fig. 4B, the flapper plate 22 of the flapper valve 20 further includes a force augmentor 40 as will now be described in further detail. The force augmentor 40 generates an additional force, or additional forces, on the flapper plate 22 when it is in its open position 22A. Or particularly, the force augment or 40 generates an additional force on the flapper plate 22 in a direction towards the stopper 24, such as to maintain the downstream surface 28 of the flapper plate 22 abutted firmly against the planar surface 31 of the stopper 24 when the flapper plate is in its fully open position 22A. In the embodiment of Fig. 2A to Fig. 4B, the force augmentor 40 includes a deflector 41 that extends away from the upstream surface 26 of the flapper plate 22 and thereby projects into the air flow F when the flapper plate 22 is located in the fully open position 22A. The deflector 41 extends from the upstream surface 26 of the flapper plate 22 at an angle relative to the direction of flow F. In a particular embodiment, this angle may be approximately 90°, whereby the deflector is substantially perpendicular to a plane defined by the upstream surface 26 of the flapper plate 22. However, this angle may be between 0 degrees and less than 180 degrees. In all cases, the angled defined between the deflector 41 and the upstream surface 26 of the flapper plate 22 is such that the deflector 41 protrudes into the airflow F an amount sufficient to generate an additional force that acts on the flapper plate 22 to move it into the fully open position 22A and/or maintain it in this fully open position 22A. The air flow F passing through the opening 19 of the flapper valve 20 well contact the deflector 41, generating a force F2 on the deflector 41 as schematically shown in Fig. 2A and 2B. This force F2 on the deflector 41 Acts in an angular direction, and given the pivot access 25 of the pivoting flapper plate 22, forces the flapper plate further open, and more particularly provides an additional force on the flapper plate 22 such as to maintain it in its fully open position 22A when air flow F is flowing through the valve 20. This additional force generated on the flapper plate 22 by the deflector 41 thereby further helps to maintain the flapper plate 22 in its fully open position 22A and thus limits and/or prevents flutter of the valve.

As can be seen in Fig 2A to Fig 4B, the deflector 41 is located on the upstream surface 26 of each of the flapper plates 22 at a position that is between the inner edge or inner end 27 and the outer edge or tip 23. Disposition may be selected such as to produce a desired amount of force on the flapper plate. For example, locating the deflector 41 at a position that is closer to the outer tip 23 may enable the deflector 41 to generate a greater amount of force on the flapper plate 22 than if the deflector is located close to the pivot axis 25 of the flapper plate. The position of the deflector 41, and consequently the force generated on the flapper plate 22, also needs to be selected such as to find a desired balance between the weight of the deflector, the force generated by the deflector on the flapper plate, and the force of the air flow passing through the valve. In most applications, the deflector 41 is positioned on the flapper plate 22 at a position between 1/3 to 2/3 of the total length of the flapper plate (i.e., the length of the flapper plate 22 measured from its inner edge 27 proximate the pivot axis 25 to its outer tip 23). In certain embodiments, the deflector may located close to a midpoint or midspan location on the upstream surface 26 of the flapper plate. However, and as best seen in figure 4A in figure 4B for example, the deflector 41 is in the depicted embodiment located at a position on the flapper plates 22 that corresponds substantially to a height of the stopper 24 away from the downstream side of the base 21. Stated differently, and as seen in figure 4B for example, the deflectors 41 of the flapper plates 22 are located such that they are substantially aligned with a top surface of the stopper 24. This configuration will ensure that the additional force generated by the deflector 41 on each flapper plate 22 acts directly against the rigid surface of the stopper 24, rather than acting on the flapper plate further downstream from the stopper which may otherwise impose unnecessary bending forces on the flapper plate 22.

As best seen in Figs. 3B, 4A and 4B, in the depicted embodiment the deflector 41 has a generally arcuate body 43 that defines a concave surface 45 on one side and a convex surface 47 on the other, opposed, side. The deflector 41 is therefore curved or arcuate. Or particularly, the concave side 45 of the arcuate body 43 faces in a direction of the air flow F, such that the air flow flowing through the valve will first contact the concave surface 45 of the deflector 41. This curved or arc-shaped configuration of the deflector 41 enables the deflector to effectively catch more air in comparison for example with a similar deflector that is otherwise flat or not curved in such a manner. This further increases the additional force generated on the flapper plates 22 of the flapper valve to thereby maintain the flapper plates in their fully open position 22A and thus limit the likelihood of flutter.

As can be seen in the depicted embodiments, the flapper plate 22 may be generally semicircular in shape, whereby the outer tip or outer edge 23 of the flapper plate defines a rounded or curved edge corresponding to the shape of the air opening 19. However, the flapper plate 22 may have other profiles. For example, the flapper plate itself may also be trapezoidal in shape, where in the outer edge of the plate defines a greater width than the inner edge of the plate. In this embodiment, the outer edge and the inner edge of the flapper plate may be substantially parallel to each other. Other shapes of the flapper plate are contemplated.

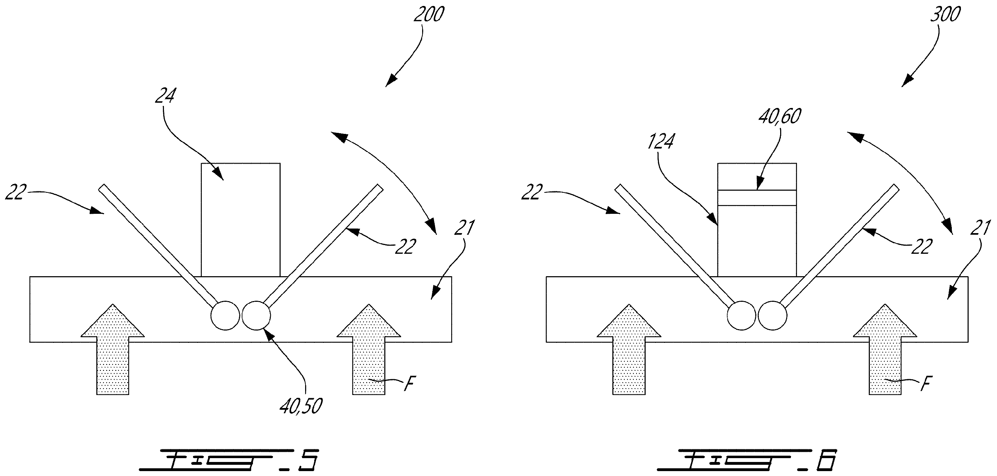

Reference will now be made to Figs. 5, 6 and 7A-7B, which depict valve assemblies 200, 300, 400 in accordance with alternate embodiments of the present disclosure. Many features of the valve assemblies 200, 300, 400 share many common features with the valve assembly 20 as described above, and like features will be identified with the same reference numbers but need not be explained in detail again hereinbelow. The following description will therefore focus on features that are particular to these embodiments.

Referring to Fig. 5, the valve assembly 200 is similar to the valve assembly 20 described above, the valve assembly 200 includes a biasing element 50 that acts on the flapper plate 22 to dampen movement of the flapper plate and thereby reduce undesirable impacts against the stopper 24. The biasing element 50 dampens movement of the flapper plate 22 to thereby dampen flutter motion and reduce overall fluttering of the valve assembly 200. In one particular example, the biasing element 50 is a torsion spring that is incorporated into the hinge or pivot joint of the one or more pivoting flapper plate 22. The torsion spring dampens pivoting movement of the flapper plate 22 to prevent it from being able to swing open (or closed) too quickly and thus acts as a type of "soft close" feature (or in this case, a soft open) that limits the ability of the flapper plate 22 from harshly impacting the stopper 24. The biasing element 50 of the valve assembly 200 provides damping throughout the entire range of motion of the flapper plate 22, thereby preventing drastic or sudden swings in movement when transitioning from the fully closed position of the flapper plates to the fully open position of the flapper plates, and vice versa. The strength of the spring forming the biasing element 50 can be selected to ensure that it provides resistance at the end of the travel or range of motion of the flapper plate near the stopper 24 (i.e., as the flapper plate 22 approaches the fully open position), to thereby ensure that the flapper plate does not impact the stopper with unnecessary force during movement of the flapper plate. In certain alternate embodiments, the biasing element 50 may be sufficient to permit the stopper to be removed, if the biasing element has a spring force that is sufficient to securely maintain the flapper plate 22 in its fully open position.

Although the valve assembly 200 as depicted in Fig. 5 is not shown with a deflector 41, it is to be understood that the valve assembly 200 may include the deflector 41 of the valve assembly 20. In this manner, the deflector 41 will act to generate additional force on the flapper plate 22 such as limit or prevent flutter by maintaining the flapper plate 22 firmly pressed against the stopper 24 in the fully open position of the flapper plate 22 and thus the valve, and the biasing element 50 will dampen movement of the flapper plate 22 and thus further dampen any potential flutter of the valve assembly.

Referring now to Fig. 6, the valve assembly 300 is similar to the valve assembly 20 described above, however the force augmentor 40 of the valve assembly 300 includes a solenoid 60 that is operable to control the position of the flapper plate(s) 22. In much the same way as the deflector 41 acts to generate additional force on the flapper plate 22 to force it to securely maintain its fully open position, the solenoid 60 of the valve assembly 300 is capable of retaining the metallic flapper plates 22 in their fully open position when the airflow passes through the valve assembly. In the depicted embodiment, the solenoid 60 is integrated into the stopper 124. When actuated (e.g., when the solenoid is provided with current) and in its "on" state, the solenoid 60 will retain the flapper plate 22 abutted against the stopper 124 in the fully open position thereof and thus not permit the flapper plate to move away from the stopper or flutter. When the solenoid is deactivated, that is electric current to the solenoid 60 is stopped and thus the solenoid is returned to its "off" state, the flapper plates 22 are free to return (such as by gravity) to their closed position. The solenoid 60 can therefore be controlled by an electric current to actuate or deactivate it, and this electric current can be supplied and controlled by a controller using a suitable control schedule. This may be based, for example, on the bleed off schedule of the aircraft engine. Additionally, the solenoid 60 may be positioned such that that one pole is embedded within the stopper 124 to ensure the retention of both flapper plates in their fully open position when the solenoid is electrically actuated.

Additionally, in certain embodiments, the flapper plates 22 of the valve assembly 300 may also be made of a magnetic material. In this variant, the solenoid 60 is repositioned in the stopper 124 such that both the north (N) and south (S) poles of the solenoid are embedded within the stopper 124, and thus to ensure that both flapper plates 22 are retained in place in the fully open position thereof when the solenoid 60 is actuated, the flapper plates may be made of a magnetic material.

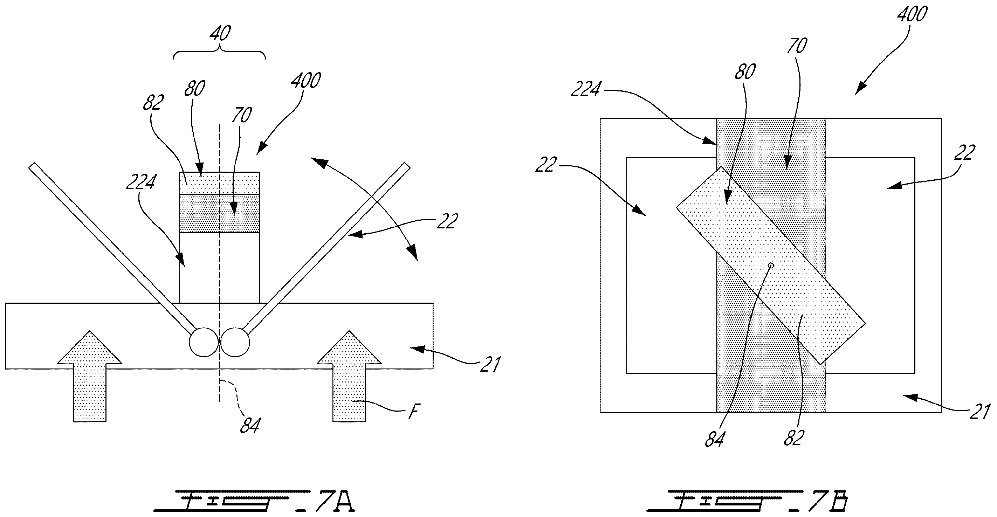

Referring now to Figs. 7A-7B, the valve assembly 400 is similar to the valve assembly 20 and the valve assembly 300 described above, however the force augmentor 40 of the valve assembly 400 includes a magnet 70 and a servo assembly 80, that are collectively operable to control the position of the flapper plate(s) 22. More particularly, the magnet 70 and the servo assembly 80 respectively act to maintain the flapper plates 22 in the fully open position and release the flapper plates from this fully open position when the valve assembly 400 is to be closed. The magnet 70 is integrated into the stopper 224 or, alternately, the stopper 224 is itself formed of a magnetic material. As such, the metallic flapper plates 22 will be retained in place against the stopper 224, in the fully open position, by the magnet 70 when the flapper plates are opened by the airflow passing through the valve assembly 400. When it is time for the valve to close and thus the flapper plates 22 to return to their closed position, the servo assembly 80 is actuated to forcible separate the flapper plates 22 from the magnet 70 of the stopper 224. For example, as seen in Fig. 7B, a cam element 82 of the servo assembly 80 may be actuated, by a servo motor for example, to rotate about an axis 84. The servo motor (not shown) may be integrated within the stopper 224 or may be located remote from the valve assembly 400. Rotation of the cam element 82, as shown in Fig. 7B, will push the flapper plates 22 away from stopper 224. Once disengaged in this manner, the flapper plates 22 are then able to return back to their closed position, such as by gravity. The servo assembly 80 is actuated by an electrical current that is be supplied and controlled by a controller using a suitable control schedule. This may be based, for example, on the bleed off schedule of the aircraft engine.

It is to be understood that any element or combination of elements of each of the above-described valve assemblies 20, 200, 300, 400 can be combined into any of the other valve assemblies 20, 200, 330, 400. For example only, the force augmentor 40 of any of the valve assemblies 200, 300, 400 can include a deflector 41. Similarly, for example only, the force augmentor 40 of the valve assembly 20 can include any of the solenoid 60, and/or the magnet 70 and servo assembly 80, or any combination of one or more of these elements. Additionally, any of the valve assemblies 20, 300, 400 can include the biasing element 50 of the valve assembly 200.

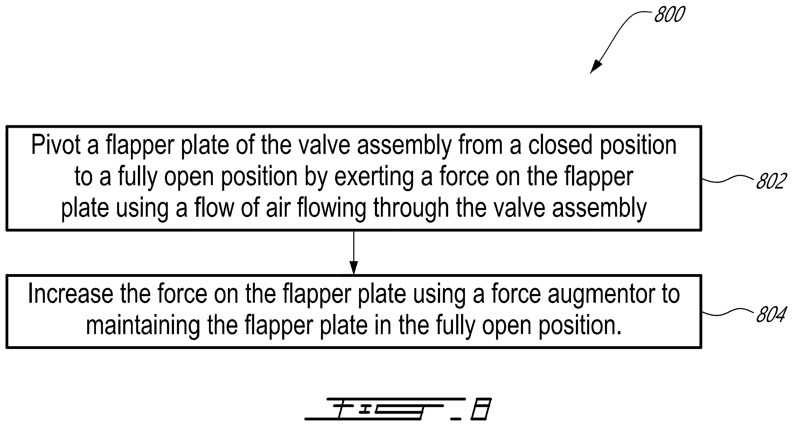

Referring now to Fig. 8, a method 800 of using a valve assembly (such as any of the valve assemblies 20, 200, 300 and 400) of an aircraft engine will now be described. The method 800 generally includes, at step 802, pivoting a flapper plate of the valve assembly from a closed position to a fully open position by exerting a force on the flapper plate using a flow of air flowing through the valve assembly. The method also includes, at step 804, increasing the force on the flapper plate using a force augmentor, such as any of the force augmentors 40 described above, to maintain the flapper plate in the fully open position.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A valve assembly for an aircraft engine (10), the valve assembly comprising:
a base (21) defining an air opening (19) passing therethrough from an upstream side (15) of the base (21) to a downstream side (17) of the base (21), the air opening (19) configured to receive airflow therethrough in a flow direction from the upstream side (15) to the downstream side (17);
a stopper (24) extending from the downstream side (17) of the base (21) adjacent the air opening (19);
a flapper plate (22) pivotably mounted to the base (21) about a pivot axis (25), the flapper plate (22) having an upstream surface (26) and a downstream surface (28) opposite the upstream surface (26), the upstream surface (26) extending from an inner edge (27) adjacent the pivot axis (25) to a remote outer edge (23), wherein the flapper plate (22) is pivotable relative to the base (21) and the stopper (24) between a closed position (22B) and a fully open position (22A), in the fully open position (22A) the downstream surface (28) of the flapper plate (22) abuts the stopper (24), and in the closed position (22B) the flapper plate (22) obstructs the air opening (19); and
a deflector (41) extending from the upstream surface (26) of the flapper plate (22) and projecting into the airflow when the flapper plate (22) is located in the fully open position (22A).

2. The valve assembly as defined in claim 1, wherein the stopper (24) defines a planar surface (31) complimentary to the downstream surface (28) of the flapper plate (22), such that the downstream surface (28) of the flapper plate (22) abuts against the planar surface (31) of the stopper (24) to define a planar interface.

3. The valve assembly of claim 2, wherein the planar surface (31) of the stopper (24) is orientated at an angle defined relative to the downstream side (17) of the base (21), the angle being greater than 0 degrees and less than or equal to 90 degrees.

4. The valve assembly as defined in any preceding claim, wherein the deflector (41) extends from the upstream surface (26) of the flapper plate (22) at an angle relative to the flow direction, the angle being greater than 0 degrees and less than 180 degrees, and optionally wherein the deflector (41) is substantially perpendicular to a plane defined by the upstream surface (26) of the flapper plate (22).

5. The valve assembly as defined in any preceding claim, wherein the deflector (41) is located on the upstream surface (26) at a position between the inner edge (27) and the remote outer edge (23).

6. The valve assembly as defined in claim 5, wherein the position on the upstream surface (26) corresponds substantially to a height of the stopper (24) away from the downstream side (17) of the base (21), or the position of the deflector (41) on the upstream surface (26) is between 1/3 to 2/3 of a length of the flapper plate (22) away from the inner edge (27), the length of the flapper plate (22) being defined between the inner edge (27) and the remote outer edge (23).

7. The valve assembly as defined in any preceding claim, wherein the flapper plate (22) is one of two flapper plates (22) pivotably mounted to the base (21) and independently movable, the two flapper plates (22) being located on opposite sides of the stopper (24) and disposed such that the downstream surface (28) of each of the two flapper plates (22) faces the other when the two flapper plates (22) are in the fully open position (22A).

8. The valve assembly as defined in claim 7, wherein the stopper (24) has a first planar surface (31) facing a first one of the two flapper plates (22) and a second planar surface (31) facing a second one of the two flapper plates (22), the first and second planar surfaces (31) of the stopper (24) being non-parallel, and optionally wherein the stopper (24) defines a trapezoidal cross-sectional shape with a wider downstream end than upstream end, and the first and second planar surfaces (31) of the stopper (24) are oriented at acute angles relative to the downstream side (17) of the base (21).

9. The valve assembly as defined in any preceding claim, wherein the deflector (41) defines an arcuate body (43) that has a concave surface (45) facing in the flow direction.

10. The valve assembly as defined in any preceding claim, further comprising a torsion spring that dampens movement of the flapper plate (22) between the closed position (22B) and the fully open position (22A).

11. The valve assembly as defined in any preceding claim, further comprising a solenoid (60) that, upon actuation by an electric current, retains the flapper plate (22) abutted against the stopper (24) in the fully open position (22A), and optionally wherein the solenoid (60) is integrated into the stopper (24), and more optionally, the flapper plates (22) being more optionally made of a magnetic material.

12. The valve assembly as defined in any preceding claim, further comprising a magnet (70) defining at least a portion of the stopper (24), the flapper plate (22) being made of a magnetic material having an opposite pole to the magnet (70) of the stopper (24), and including a servo assembly (80) operable to disengage the flapper plate (22) from the stopper (24) when the flapper plate (22) is to be returned to the closed position (22B) thereof.

13. The valve assembly as defined in any preceding claim, comprising a force augmentor (40) for generating force on the flapper plate (22) in a direction towards the stopper (24) to maintain the downstream surface (28) of the flapper plate (22) abutted against the stopper (24) in the fully open position (22A).

14. The valve assembly according to claim 13, wherein the force augmentor (40) includes:
the deflector (41); and/or
a solenoid (60) that, upon actuation by an electric current, retains the flapper plate (22) abutted against the stopper (24) in the fully open position (22A); and/or
a magnet (70) defining at least a portion of the stopper (24), the flapper plate (22) being made of a magnetic material having an opposite pole to the magnet (70) of the stopper (24), and including a servo assembly (80) operable to disengage the flapper plate (22) from the stopper (24) when the flapper plate (22) is to be returned to the closed position (22B) thereof.

15. A method of using a valve assembly in an aircraft engine (10), the method comprising:
pivoting a flapper plate (22) of the valve assembly from a closed position (22B) to a fully open position (22A) by exerting a force on the flapper plate (22) using a flow of air flowing through the valve assembly; and
increasing the force on the flapper plate (22) using a force augmentor (40) to maintain the flapper plate (22) in the fully open position (22A).
